# EUROPEAN PATENT SPECIFICATION

(11) **EP 1 676 631 B1**
(45) Date of publication and mention of the grant of the patent: **15.08.2018**
(21) Application number: 05109589.1
(22) Date of filing: 14.10.2005
(51) Int. Cl.: B01J 6/00, B82B 1/00

(54) **Apparatus for producing nanoparticles**
Vorrichtung zur Herstellung von Nanoteilchen
Appareillage pour produire des nanoparticules

(30) Priority: 28.12.2004 KR 2004114032; 29.12.2004 KR 2004115263
(43) Date of publication of application: 05.07.2006
(60) Divisional application: 09150383.9
(73) Proprietor: Samsung Electronics Co., Ltd., Suwon-si, Gyeonggi-do 16677 (KR)
(72) Inventor: Ji, Jun Ho, Namyangju-Si Gyeonggi-do (KR); Noh, Hyung Soo, Gyeonggi-Do (KR)
(74) Representative: Walaski, Jan Filip

(56) References cited:
- EP-A- 1 188 801
- WO-A-03/050040
- US-A- 5 070 232
- US-A- 5 618 475
- US-A- 5 665 277
- US-A1- 2004 005 269
- US-A1- 2004 101 454

## Description

The present invention relates to a nanoparticle generator.

Generally, nanoparticles are ultra-fine particles having a size of about 1 nm to 100 nm which can have special physical properties compared with bulk materials due to their increased surface area in relation to their size.

The smaller the size of a particle, the higher the proportion of atoms present at the surface of the material. Thermodynamically, the energy level of atoms at the surface of a material is higher than the energy level of atoms within the material. This is sometimes referred to as the "quantum size effect" and, due to this effect, nanomaterials have higher energy levels per unit atom than the energy level per unit atom of bulk materials. Due to the quantum size effect, nanoparticles can have special chemical and physical properties, such as improved strength or melting point, and high activity when used as a catalyst.

Nanoparticles can be manufactured by gas condensation. For example, nanoparticles are generated by condensing gas generated when a material is heated in low-pressure inert gas or air. A conventional nanoparticle generator using the gas condensation will now be described.

A conventional nanoparticle generator includes a main body provided in the form of an electric heating furnace for forming a high-temperature heating atmosphere, a tube passing through an inner side of the main body, a vessel disposed at the central portion to accommodate material for manufacturing nanoparticles, and a heating body installed between the inner wall and the outer wall of the main body to correspond to the position of the vessel.

Thus, in a state of allowing a fluid such as low-pressure inert gas, air, or the like to flow through the tube, when the heating body is heated, the temperature of the inside of the main body is increased to heat the ceramic tube so that the inner temperature of the ceramic tube is increased. Thus, when the temperature of the material is greater than a predetermined temperature, gas is generated due to the vaporization of the material. The generated gas is carried away from the heating body and condensed by the fluid flowing through the tube, thereby generating nanoparticles. The generated nanoparticles are transmitted outside of the main body by the fluid.

Recently, sterilizing materials, such as silver or gold, or noxious gas absorbents, such as carbon or titanium dioxide, have been made into nanoparticles, thereby enhancing their properties. There are various efforts to apply such materials to electrical home appliances.

Thus, it can be expected that nanoparticle generators using bactericides and for removing noxious gases will be installed in an electrical home appliance such that nanoparticles generated from the material are supplied indoors, thereby enhancing the ability of the electrical home appliances to kill bacteria and remove harmful gas.

However, a conventional nanoparticle generator heats the inner space of the tube, in which the material is installed, and a space between the tube and the inner wall of the main body, due to the heating body installed between the outer wall and the inner wall of the main body. Thus, it is difficult to minimize the conventional nanoparticle generator since there must be sufficient space between the heating body and the material. When a conventional nanoparticle generator is installed in an electrical home appliance, the electrical home appliance is increased in size.

US 2004/0101454 A1 and US5,618,475 disclose a nanoparticle generator having two different chambers connected by a small outlet. The first chamber is provided as a resistance heater tube in which a vapour of a metallic catalyst material is created. The tube, made for example of graphite, is heated by passing an electrical current therethrough via electrical lead wires. A carrier gas carries the evaporated source material through an outlet in the tube into the second chamber, the condensation chamber.

US5,665,277 also discloses a nanoparticle generator having two difference chambers connected by a small outlet. The material to be evaporated is provided in a crucible in the first chamber which can be heater by electrical resistance heating wires disposed about the crucible. Again, a carrier gas carries the evaporated source material through the outlet in the first chamber into the second chamber.

The present invention seeks to provide an improved nanoparticle generator.

According to an aspect of the present invention, there is provided a nanoparticle generator according to claim 1.

According to a first aspect of the present invention there is provided a nanoparticle generator comprising means for heating a source, a housing for the heating means and a passage passing through the housing, the heating means comprising an insulator configured with a recess for receiving and contacting the source, said recess opening into said passage such that, when the source is received in the heating means, at least a portion of the source is open to the passage, and a heater at least partly disposed in the insulator and configured to provide at least one side of the recess, the heater comprising a heating wire.

The heater may be plate-shaped. The heater may comprise a heating part forming at least one side of the recess and the heating part and recess may be configured such that the heating part surrounds the recess or *vice versa.* The heating part may have a circular cross-section and the recess may have an annular cross-section or *vice versa.*

The passage may cross over the heating unit between the heating means and an insulator. The heating means may be disposed in the passage.

The heating means may be configured to receive the source such that the source faces down the passage. The heating means may be spaced apart from sidewalls of the passage.

The passage may be in the form of a cyclone chamber.

The cyclone chamber may comprise an upper cylinder, a lower cone, an inlet formed on a lateral side of the upper cylinder in a tangential direction and an outlet formed on an upper side of the upper cylinder, and the heating unit may be disposed below the outlet. The nanoparticle generator may further comprise a tube extending a predetermined distance from the outlet into the cyclone chamber for guiding fluid out of the chamber and into the outlet. The heating means may be configured to receive the source such that the source faces the outlet.

Embodiments of the present invention will now be described, by way of example, with reference to the accompanying drawings in which:
Figure 1 is a side sectional view illustrating the structure of a first embodiment of a nanoparticle generator according to the present invention;
Figure 2 is a plan sectional view of the nanoparticle generator shown in Figure 1;
Figure 3 is a perspective view illustrating a first embodiment of a heating unit for a nanoparticle generator according to the present invention;
Figure 4 is an exploded perspective view illustrating a heater of the heating unit shown in Figure 3;
Figure 5 is a side sectional view illustrating the structure of a second embodiment of a nanoparticle generator according to the present invention;
Figure 6 is a plan sectional view and a side sectional view illustrating the structure of a third embodiment of a nanoparticle generator according to the present invention;
Figure 7 is a plan sectional view and a side sectional view illustrating the structure of a fourth embodiment of a nanoparticle generator according to the present invention;
Figure 8 is a side sectional view illustrating a second embodiment of a heating unit for a nanoparticle generator according to the present invention; and
Figure 9 is a side sectional view illustrating a third embodiment of a heating unit for a nanoparticle generator according to the present invention.

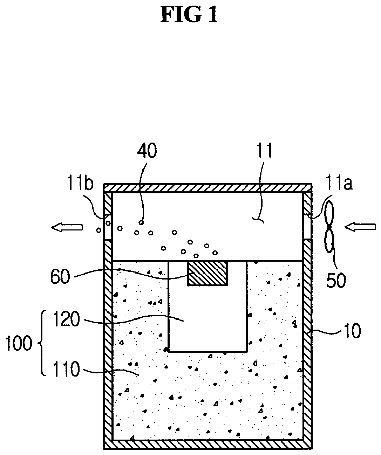

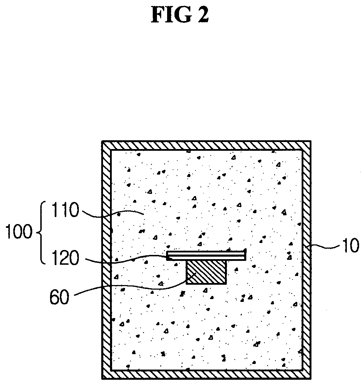

Referring to Figures 1 and 2, a first embodiment of a nanoparticle generator according to the present invention is shown. The nanoparticle generator is a device for generating nanoparticles using generally gas condensation, namely, by heating material in a predetermined fluid, such as low pressure inert gas or air, and condensing the gas generated from the material.

The heating unit may include an insulator having a material accommodating room communicating with the cyclone chamber to accommodate the material and having an opened side facing the cyclone chamber, and a heater disposed in the insulator to form at least one side of the material accommodating room.

Embodiments of the present invention will now be described, by way of example, with reference to the accompanying drawings in which:
Figure 1 is a side sectional view illustrating the structure of a first embodiment of a nanoparticle generator according to the present invention;
Figure 2 is a plan sectional view of the nanoparticle generator shown in Figure 1;

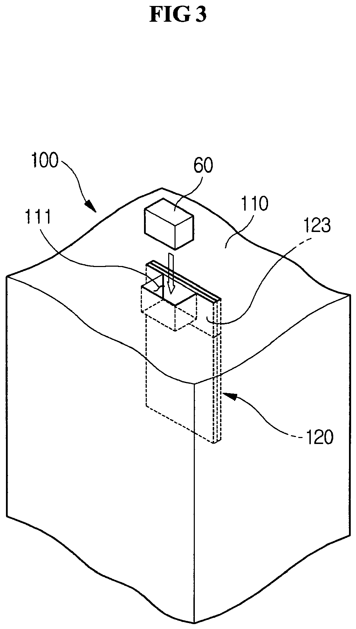

Figure 3 is a perspective view illustrating a first embodiment of a heating unit for a nanoparticle generator according to the present invention;

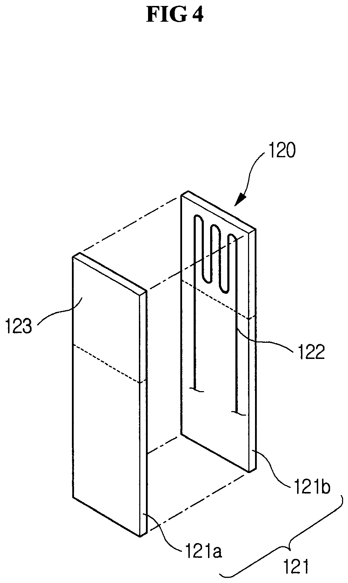

Figure 4 is an exploded perspective view illustrating a heater of the heating unit shown in Figure 3;

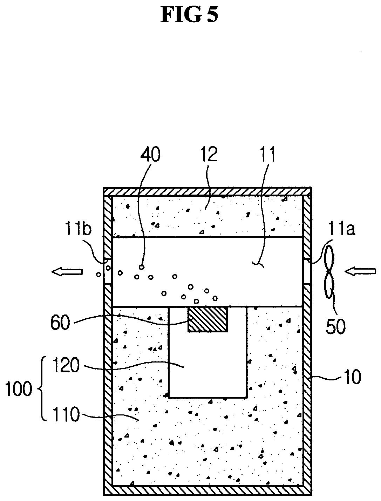

Figure 5 is a side sectional view illustrating the structure of a second embodiment of a nanoparticle generator according to the present invention;

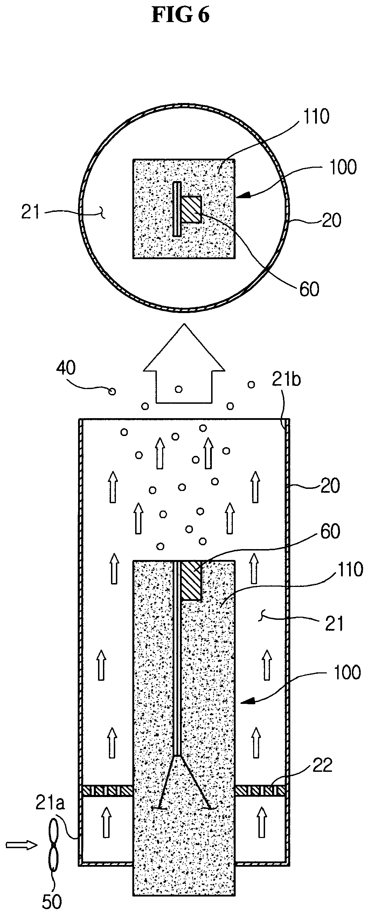

Figure 6 is a plan sectional view and a side sectional view illustrating the structure of a third embodiment of a nanoparticle generator according to the present invention;

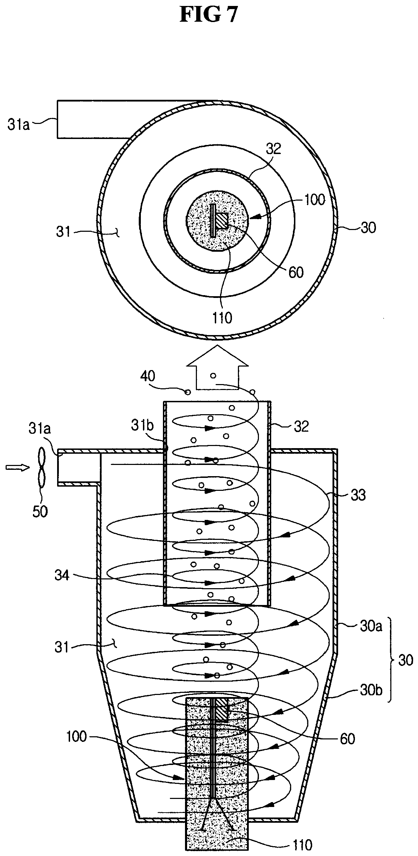

Figure 7 is a plan sectional view and a side sectional view illustrating the structure of a fourth embodiment of a nanoparticle generator according to the present invention;

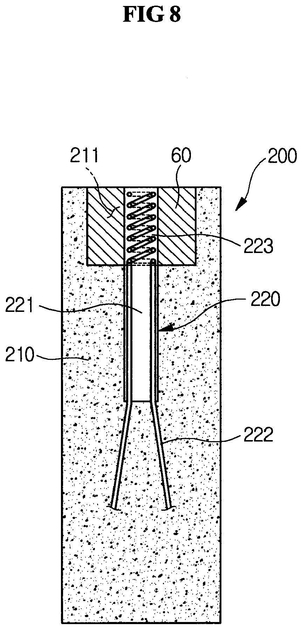

Figure 8 is a side sectional view illustrating a second embodiment of a heating unit for a nanoparticle generator according to the present invention; and

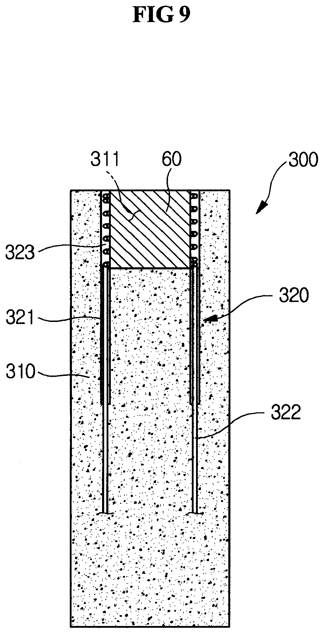

Figure 9 is a side sectional view illustrating a third embodiment of a heating unit for a nanoparticle generator according to the present invention.

Referring to Figures 1 and 2, a first embodiment of a nanoparticle generator according to the present invention is shown. The nanoparticle generator is a device for generating nanoparticles using generally gas condensation, namely, by heating material in a predetermined fluid, such as low pressure inert gas or air, and condensing the gas generated from the material.

The nanoparticle generator includes a main body 10 (which may also be referred to as a "housing"), a passage 11, disposed in an inner upper side of the main body 10 and passing through the main body 10 from a lateral side of the main body 10 to the opposite lateral side thereof, through which a fluid flows, and a heating unit 100 disposed at a lower side of the passage 11 in the main body 10 to heat a material 60 (which may also be referred to as a "source").

At an inlet 11a of the passage 11, a blower fan 50 is installed to generate a blowing force for supplying the fluid to the inside of the passage 11 and transmitting generated nanoparticles 40 out of the main body 10. Alternatively, the blower fan 50 can be omitted since the fluid can flow through the passage 11 by adjusting the pressure difference between the inlet 11a and an outlet 11b of the passage 11.

The heating unit 100 directly contacts and heats the material 60, thereby eliminating a space between the heating unit 100 and the material 60. Thus, the volume of the nanoparticle generator can be reduced. The heating unit 100 enables the volume of the generator to be reduced, as will not be explained:.

Referring to Figures 3 and 4, the heating unit 100 includes an insulator 110 having a cubic material accommodating room 111 which accommodates the material 60 and is formed in the upper central portion thereof. The material accommodating room 111 has an open top in communication with the passage 11.

The heating unit 100 further includes a heater 120 disposed in the insulator 110 to form at least one side of the material accommodating room 111 such that the heating unit 100 can directly heat the material 60 via the heater 120. Here, the insulator 110 prevents heat of the heater 120 from being transmitted and lost to the inner wall of the main body 10 thereby improving the efficiency of the heating unit 100.

In this embodiment, the heater 120 includes a plate ceramic heating body 121, and a heating wire 122 made of tungsten wire embedded in the heating body 121 to generate heat when electric power is supplied thereto, so that the heater 120 has a plate shape.

The heating wire 122 is embedded in the heating body 121 to prevent the heating wire 122 from being exposed to the fluid flowing through the passage 11 and from eroding. The heating body 121 is structured such that the heating wire 122 is interposed between a pair of ceramic heating plates 121a and 121b attached to each other. Ends of the heating wire 122 extend to the outside of the heating body 121 and are connected to the external power source (not shown) which supplies electric power.

The heater 120 extends down from the upper central portion thereof to a predetermined distance below the material accommodating room 111 such that the upper side of the heater 120 corresponding to the material accommodating room 111 forms a heating part 123 for forming a side of the material accommodating room 111. The heating wire 122, embedded in the heating body 121 to smoothly heat the material 60 via the heating part 123, has a serpentine shape bent several times and is disposed to the heating part 123. By the arrangement of the heating wire 122 and the heating body 121, the heater 120 can heat the material 60 contacting the heating part 123 to 20 degrees centigrade to 2000 degrees centigrade.

Thus, when the blower fan 50 is driven to cause fluid to flow from the inlet 11a to the outlet 11b of the passage 11 and the electric power is supplied to the heating wire 122, the heater 120 heats the material 60 so that the upper side of the material 60 exposed to the passage 11 is evaporated. The evaporated atoms of the material 60 collide with molecules of the fluid flowing through the passage 11 and are cooled. During this process, the probability of collision between the evaporated atoms of the material 60 is increased and the evaporated atoms conglomerate to form cores (which may also be called "clusters"). The cores grow such that atoms of the material 60 generate nanoparticles 40. The generated nanoparticles 40 are supplied to the outside of the main body 10 through the outlet 11b of the passage 11 via to the fluid.

By eliminating the space between the heating unit 100 and the material 60, the volume of the nanoparticle generator can be reduced and the size of the nanoparticle generator can be minimized. Thus, the nanoparticle generator can be more easily installed in electrical home appliances.

The nanoparticles 40, generated from the material 60, flow from a high temperature side to a low temperature side due to thermophoresis when the nanoparticles 40 are generated. When this happens, the amount of the nanoparticles 40 discharged outside of the main body 10 may be reduced since some of the generated nanoparticles 40 flow toward the upper inner wall of the main body 10 having a lower temperature than the heating unit 100.

Referring to Figure 5, a second embodiment of a nanoparticle generator according to the present invention is shown which seeks to overcome the above-mentioned problem. The nanoparticle generator includes an insulator 12 disposed between the upper side of the passage 11 opposite to the heating unit 100 and the main body 10. Due to the insulator 12, a temperature difference between the upper side of the passage 11 and the heating unit 100 is reduced so that the generated nanoparticles 40 smoothly flow to the outlet 11b of the passage 11 via the fluid and are discharged to the outside of the main body 10 while minimising loss.

By eliminating the space between the heating unit 100 and the material 60, the volume of the nanoparticle generator can be reduced and the size of the nanoparticle generator can be minimized. Thus, the nanoparticle generator according to the present invention can be easily installed to electrical home appliances. Furthermore, the amount of nanoparticles 40 being discharged to the outside of the main body 10 can be increased.

Third and fourth embodiments of nanoparticle generators according to the present invention which allow the size of the generator to be minimised while also reducing loss of nanoparticles will now be described.

Referring to Figure 6, a third embodiment of a nanoparticle generator according to the present invention includes a heating unit 100, which is identical to the heating unit 100 described earlier, and an open-topped cylindrical main body 20, wherein a space between the main body 20 and the heating unit 100 serves as a passage 21 for transmitting a fluid.

The open top of the main body 20 serves as an outlet 21b of the passage 21 and, at a lower side wall of the main body 20, an inlet 21a of the passage 21 is formed. The heating unit 100 is disposed in the passage 21 such that an upper side having the material 60 is spaced apart from the sidewall of the passage 21.

Thus, in the third embodiment of a nanoparticle generator according to the present invention, there can be a reduction in the flow of nanoparticles 40 towards the inner wall of the main body 20 having a temperature lower than that of the heating unit 100, i.e. the sidewall of the passage 21, by the fluid flowing through the outside of the heating unit 100. Moreover, loss of nanoparticles 40 can be prevented or reduced without using an insulator as used in the second embodiment of the invention hereinbefore described since gas is evaporated from the material 60 in the direction parallel to the flow direction of the fluid such that the generated nanoparticles 40 are smoothly guided to the outlet 21b of the passage 21. In this structure, the fluid flowing between the heating unit 100 and the sidewall of the passage 21 forms a fluid layer between the heating unit 100 and the sidewall of the passage 21 and the fluid layer forms an insulator layer in association with the insulator 110 for forming the outer side of the heating unit 100, so that heating efficiency of the heater 120 is also improved.

Further, between the passage 21 adjacent to the inlet 21a and the heating unit 100, a filter 22 is provided for filtering foreign matter contained in the fluid flowing through the passage 21 so that impurities are prevented from mixing with the nanoparticles 40 discharged out of the main body 20.

Referring to Figure 7, a fourth embodiment of a nanoparticle generator according to the present invention is shown which generates and discharges the nanoparticles using a cyclone.

The fourth embodiment of the nanoparticle generator according to the the present invention includes a main body 30 having an upper cylinder 30a and a lower cone 30b which form a cyclone chamber 31 in the main body 30. An inlet 31a and an outlet 31b of the cyclone chamber 31 are respectively formed at the upper lateral side in the tangential direction and the upper central portion of the upper cylinder 30a.

In the outlet 31b, a guide tube 32 for guiding the nanoparticles 40 discharged from the cyclone chamber 31 to the outside of the main body 30 is installed and has a lower side which extend a predetermined distance into the cyclone chamber 31. The heating unit 100 is positioned such that the material 60 is disposed below the guide tube 32 in the cone 30b and is spaced apart from the sidewall of the cyclone chamber 31.

In the nanoparticle generator having the above-mentioned structure, when the fluid enters the cyclone chamber 31 through the inlet 31a, the fluid forms an outer swirl 33 swirling along the inner wall of the cyclone chamber 31 and flowing to the lower side of the cyclone chamber 31, and an inner swirl 34 swirling from the inside to the upper side of the outer swirl 33 and flowing toward to the outlet 31b. The nanoparticles 40 generated at the upper side of the material accommodating room 111 are guided to the guide tube 32 by the inner swirl 34 and are discharged to the outside of the main body 30.

Thus, in the fourth embodiment of a nanoparticle generator according to the present invention, there can be a reduction in the flow of nanoparticles 40 towards the inner wall of the main body 30 having lower temperature than the heating unit 100, namely, the sidewall of the cyclone chamber 31 by the outer swirl 33. Although a predetermined quantity of the generated nanoparticles 40 is mixed with the outer swirl 33, the mixed nanoparticles 40 are guided by the inner swirl 34 and are discharged to the outside of the main body 30. Thus, loss of the generated nanoparticles 40 is prevented or reduced. In the fourth embodiment, the outer swirl 33 and the inner swirl 34 form a predetermined fluid layer between the heating unit 100 and the cyclone chamber 31, and the fluid layer forms an insulating layer in association with the insulator 110 so that heating efficiency of the heater 120 is also enhanced. The heating unit 100 has a cylindrical shape to reduce the interference between the inner swirl 34 and the outer surface of the heating unit 100.

In the embodiments hereinbefore described, the heating unit 100 directly heating the material may have a structure different from the structures described above.

For example, Figure 8 illustrates a second embodiment of the heating unit 200 of a nanoparticle generator in accordance with the present invention. The heating unit 200 includes an open-topped material accommodating room 211 formed in an upper inner central portion of an insulator 210 and having a ring-shaped horizontal cross-section, and a heater 220 having a rod-shaped heating body 221 and a heating wire 222 embedded in the heating body 221 such that a heating part 223 directly heating the material 60 is disposed at an upper side of the heater 220 at the inner central portion of the material accommodating room 211 and has a circular horizontal cross-section.

Thus, in the second embodiment of the heating unit 200, the heating part 223 of the heater 220 forms the inner sides of the material accommodating room 211, thereby directly heating the material 60 disposed in the material accommodating room 211.

The heating wire 222 is positioned adjacent to the inner surface of the heating body 221 and is wound in the heating body 221 in the form of a cylinder such that the heating wire 222 is concentrated to the heating body 221 adjacent to the heating part 223 to effectively transmit heat to the material 60.

Referring to Figure 9, a third embodiment of a heating unit 300 includes a material accommodating room 311 formed in the upper inner central portion of an insulator 310 and having a circular horizontal cross-section, and a heater 320 having a cylindrical heating body 321 and a heating wire 322 embedded in the heating body 321 such that a heating part 323 directly heating the material 60 is disposed outside of the material accommodating room 311 and has a ring-shaped horizontal cross-section.

Thus, in the third embodiment of a heating unit 300, the heating part 323 of the heater 320 forms the outer side of the material accommodating room 311, thereby directly heating the material 60 disposed in the material accommodating room 311. The heating wire 322 is wound between the inner side and the outer side of the heating body 321 in the form of a cylinder such that such that the heating wire 322 is concentrated to the heating body 321 adjacent to the heating part 323.

In a nanoparticle generator (not shown) including the second or third embodiments of heating units 200, 300, the nanoparticles are generated in the same way as in the nanoparticle generator having the first embodiment of heating unit 100.. Therefore, the nanoparticle generator (not shown) will not be described in more detail

## Claims

1. A nanoparticle generator comprising:
means (100) for heating a source (60);
a housing (10) for said heating means; and
a passage (11; 21; 31) passing through said housing,
said heating means comprising:
an insulator (110) configured with a recess (111) for receiving and contacting the source (60), said recess opening into said passage such that, when the source is received in the heating means, at least a portion of the source is open to the passage; and
a heater (120) disposed in the insulator and configured to provide at least one side of the recess, the heater comprising a heating wire.

2. A nanoparticle generator according to claim 1, wherein the heater (120) is plate-shaped.

3. A nanoparticle generator according to claim 1, wherein the heater (120) comprises a heating part (123) forming at least one side of the recess (111) and the heating part and recess are configured such that the heating part surrounds the recess or the recess surrounds the heating part.

4. A nanoparticle generator according to claim 3, wherein the heating part (123) has a circular cross-section and the recess (111) has an annular cross-section or the recess has a circular cross-section and the heating part has an annular cross-section.

5. A nanoparticle generator according to any preceding claim, wherein the passage (11) crosses over the heating means (100) between the heating means (100) and an insulator (12).

6. A nanoparticle generator according to any preceding claim, wherein the heating means (100) is disposed in the passage (21).

7. A nanoparticle generator according claim 6, wherein the heating means (100) is configured to receive the source (60) such that the source faces down the passage (11).

8. A nanoparticle generator according to claim 6 or 7, wherein the heating means (100) is spaced apart from sidewalls of the passage (11).

9. A nanoparticle generator according to any preceding claim, wherein the passage is in the form of a cyclone chamber (31).

10. A nanoparticle generator according to claim 9, wherein the cyclone chamber (31) comprises:
an upper cylinder (30a);
a lower cone (30b);
an inlet (31a) formed on a lateral side of the upper cylinder in a tangential direction; and
an outlet (31b) formed on an upper side of the upper cylinder;
the heating means (100) disposed below the outlet.

11. A nanoparticle generator according to claim 10, further comprising:
a tube (32) extending a predetermined distance from the outlet (31b) into the cyclone chamber (31) for guiding fluid out of the chamber and into the outlet.

12. A nanoparticle generator according to claim 10 or 11, wherein the heating means (100) is configured to receive the source (60) such that the source faces the outlet (31b).

13. The nanoparticle generator according to claim 1, wherein the heater comprises a heating part which forms at least one side of the recess, and one of the heating part and the recess surrounds the other one of the heating part and the recess.

14. The nanoparticle generator according to claim 13, wherein one of the heating part and the recess disposed at the inside of the other one of the heating part and the recess has a circular cross-section, and the other one of the heating part and the recess disposed at the outside of the one of the heating part and the recess has a ring-shaped cross-section.

## Patentansprüche

1. Nanopartikelgenerator, umfassend:
ein Mittel (100) zum Erhitzen einer Quelle (60);
ein Gehäuse (10) für das Heizmittel; und
einen Durchtritt (11; 21; 31), der durch das Gehäuse verläuft,
wobei das Heizmittel Folgendes umfasst:
einen Isolator (110), der mit einer Aussparung (111) zum Aufnehmen und Berühren der Quelle (60) konfiguriert ist, wobei die Aussparung sich in den Durchtritt öffnet, so dass, wenn die Quelle in dem Heizmittel aufgenommen wird, mindestens ein Abschnitt der Quelle zu dem Durchtritt offen ist; und
ein Heizelement (120), das in dem Isolator angeordnet ist und dazu konfiguriert ist, mindestens eine Seite der Aussparung bereitzustellen, wobei das Heizelement einen Heizdraht umfasst.

2. Nanopartikelgenerator nach Anspruch 1, wobei das Heizelement (120) plattenförmig ist.

3. Nanopartikelgenerator nach Anspruch 1, wobei das Heizelement (120) einen Heizteil (123) umfasst, der mindestens eine Seite der Aussparung (111) bildet, und der Heizteil und die Aussparung derart konfiguriert sind, dass der Heizteil die Aussparung umgibt oder die Aussparung den Heizteil umgibt.

4. Nanopartikelgenerator nach Anspruch 3, wobei der Heizteil (123) einen kreisförmigen Querschnitt aufweist und die Aussparung (111) einen kranzförmigen Querschnitt aufweist oder die Aussparung einen kreisförmigen Querschnitt aufweist und der Heizteil einen kranzförmigen Querschnitt aufweist.

5. Nanopartikelgenerator nach einem vorhergehenden Anspruch, wobei der Durchtritt (11) das Heizmittel (100) zwischen dem Heizmittel (100) und einem Isolator (12) überquert.

6. Nanopartikelgenerator nach einem vorhergehenden Anspruch, wobei das Heizmittel (100) in dem Durchtritt (21) angeordnet ist.

7. Nanopartikelgenerator nach Anspruch 6, wobei das Heizmittel (100) dazu konfiguriert ist, die Quelle (60) aufzunehmen, so dass die Quelle nach unten dem Durchtritt (11) zugewandt ist.

8. Nanopartikelgenerator nach Anspruch 6 oder 7, wobei das Heizmittel (100) von Seitenwänden des Durchtritts (11) beabstandet ist.

9. Nanopartikelgenerator nach einem vorhergehenden Anspruch, wobei der Durchtritt in der Form einer Zyklonkammer (31) ist.

10. Nanopartikelgenerator nach Anspruch 9, wobei die Zyklonkammer (31) Folgendes umfasst:
einen oberen Zylinder (30a);
einen unteren Kegel (30b);
einen Einlass (31a), der auf einer lateralen Seite des oberen Zylinders in einer Tangentialrichtung ausgebildet ist; und
einen Auslass (31b), der auf einer oberen Seite des oberen Zylinders ausgebildet ist;
wobei das Heizmittel (100) unter dem Auslass angeordnet ist.

11. Nanopartikelgenerator nach Anspruch 10, weiterhin umfassend:
eine Röhre (32), die sich in einem vorbestimmten Abstand von dem Auslass (31b) in die Zyklonkammer (31) zum Leiten von Fluid aus der Kammer und in den Auslass erstreckt.

12. Nanopartikelgenerator nach Anspruch 10 oder 11, wobei das Heizmittel (100) dazu konfiguriert ist, die Quelle (60) aufzunehmen, so dass die Quelle dem Auslass (31b) zugewandt ist.

13. Nanopartikelgenerator nach Anspruch 1, wobei das Heizelement einen Heizteil umfasst, der mindestens eine Seite der Aussparung bildet, und einer bzw. eine des Heizteils und der Aussparung den anderen bzw. die andere des Heizteils und der Aussparung umgibt.

14. Nanopartikelgenerator nach Anspruch 13, wobei einer bzw. eine des Heizteils und der Aussparung, der bzw. die an der Innenseite des anderen bzw. der anderen des Heizteils und der Aussparung angeordnet ist, einen kreisförmigen Querschnitt aufweist und der andere bzw. die andere des Heizteils und der Aussparung, der bzw. die an der Außenseite des bzw. der anderen des Heizteils und der Aussparung angeordnet ist, einen ringförmigen Querschnitt aufweist.

## Revendications

1. Générateur de nanoparticules comprenant :
un moyen (100) de chauffage d'une source (60) ;
un boîtier (10) pour ledit moyen de chauffage ; et
un passage (11 ; 21 ; 31) traversant ledit boîtier,
ledit moyen de chauffage comprenant :
un isolant (110) configuré avec un renfoncement (111) destiné à recevoir et à faire contact avec la source (60), ledit renfoncement s'ouvrant dans le passage de telle sorte que, quand la source est reçue dans le moyen de chauffage, au moins une partie de la source soit ouverte vers le passage ; et
un dispositif de chauffage (120) disposé dans l'isolant et configuré pour constituer au moins un côté du renfoncement, le dispositif de chauffage comportant une résistance chauffante.

2. Générateur de nanoparticules selon la revendication 1, dans lequel le dispositif de chauffage (120) est en forme de plaque.

3. Générateur de nanoparticules selon la revendication 1, dans lequel le dispositif de chauffage (120) comprend une partie chauffante (123) formant au moins un côté du renfoncement (111) et la partie chauffante et le renfoncement sont configurés de telle sorte que la partie chauffante entoure le renfoncement ou que le renfoncement entoure la partie chauffante.

4. Générateur de nanoparticules selon la revendication 3, dans lequel la partie chauffante (123) a une coupe transversale circulaire et le renfoncement (111) a une coupe transversale annulaire ou le renfoncement a une coupe transversale circulaire et la partie chauffante a une coupe transversale annulaire.

5. Générateur de nanoparticules selon l'une quelconque des revendications précédentes, dans lequel le passage (11) enjambe le moyen de chauffage (100) entre le moyen de chauffage (100) et un isolant (12).

6. Générateur de nanoparticules selon l'une quelconque des revendications précédentes, dans lequel le moyen de chauffage (100) est disposé dans le passage (21).

7. Générateur de nanoparticules selon la revendication 6, dans lequel le moyen de chauffage (100) est configuré pour recevoir la source (60) de telle sorte que la source soit tournée face au passage (11).

8. Générateur de nanoparticules selon la revendication 6 ou 7, dans lequel le moyen de chauffage (100) est espacé des parois latérales du passage (11).

9. Générateur de nanoparticules selon l'une quelconque des revendications précédentes, dans lequel le passage a la forme d'une chambre cyclonique (31).

10. Générateur de nanoparticules selon la revendication 9, dans lequel la chambre cyclonique (31) comprend :
un cylindre supérieur (30a) ;
un cône inférieur (30b) ;
une entrée (31a) formée sur un côté latéral du cylindre supérieur dans un sens tangentiel ; et
une sortie (31b) formée sur un côté supérieur du cylindre supérieur ;
le moyen de chauffage (100) étant disposé en dessous de la sortie.

11. Générateur de nanoparticules selon la revendication 10, comprenant en outre :
un tube (32) s'étendant sur une distance prédéterminée à partir de la sortie (31b) jusque dans la chambre cyclonique (31) pour guider un fluide hors de la chambre et jusque dans la sortie.

12. Générateur de nanoparticules selon la revendication 10 ou 11, dans lequel le moyen de chauffage (100) est configuré pour recevoir la source (60) de telle sorte que la source fasse face à la sortie (31b).

13. Générateur de nanoparticules selon la revendication 1, dans lequel le dispositif de chauffage comprend une partie chauffante qui forme au moins un côté du renfoncement, et l'un de la partie chauffante et du renfoncement entoure l'autre de la partie chauffante et du renfoncement.

14. Générateur de nanoparticules selon la revendication 13, dans lequel l'un de la partie chauffante et du renfoncement disposé à l'intérieur de l'autre de la partie chauffante et du renfoncement a une coupe transversale circulaire, et l'autre de la partie chauffante et du renfoncement disposé à l'extérieur de la partie chauffante et du renfoncement a une coupe transversale en forme d'anneau.
